# EUROPEAN PATENT APPLICATION

(11) **EP 4 675 663 A1**
(43) Date of publication of application: **07.01.2026**
(21) Application number: 24763040.3
(22) Date of filing: 22.02.2024
(51) Int. Cl.: H01H 50/56, H01H 50/04

(54) **CONNECTING STRUCTURE FOR MOVABLE REED AND BASE, AND ELECTROMAGNETIC RELAY**

(30) Priority: 02.03.2023 CN 202310192972
(71) Applicant: Xiamen Hongfa Electric Power Controls Co., Ltd., Xiamen, Fujian 361027 (CN)
(72) Inventor: ZHONG, Shuming, Xiamen, Fujian 361027 (CN); DAI, Wenguang, Xiamen, Fujian 361027 (CN); LIAO, Guojin, Xiamen, Fujian 361027 (CN)
(74) Representative: Hunter, Christopher Jack Owen
(86) International application number: PCT/CN2024/078074
(87) International publication number: WO 2024/179357

(57) **Abstract**

A connecting structure for connecting a movable reed and a base. The movable reed comprises a movable reed piece and a movable reed outlet unit; a first end part of the movable reed piece is connected to a movable contact, and a second end part is fixedly connected to a first end part of the movable reed outlet unit; the movable reed piece and the movable reed outlet unit form a V shape; a second end part of the movable reed outlet unit is configured as an outlet connecting part; the base is provided with a slot; a thinned structure extends outwards from the first end part of the movable reed outlet unit; the thinned structure is fitted in the slot of the base; positioning ribs are arranged in the slot of the base, and the positioning ribs abut against a side surface of the thinned structure. By utilizing the thinned structure, the material thickness variation of the movable reed outlet unit can be reduced, and the clamping reliability is improved.

## Description

### CROSS-REFERENCE

The present disclosure claims priority to Chinese Patent Application No. 202310192972.4 filed on March 2, 2023, which is incorporated herein by reference in its entirety.

### TECHNICAL FIELD

The present disclosure relates to the technical field of relays and, more particularly, to a connecting structure for a movable contact part and a base, and an electromagnetic relay.

### BACKGROUND

A magnetic latching relay typically consists of a magnetic circuit system, a contact system, a pushing mechanism, and a base. The magnetic circuit system is generally composed of two magnetic circuits that are substantially symmetrical, including a stationary magnetizer component, a movable magnetizer component, and a coil. The contact system includes a movable contact part and a static contact part. The pushing mechanism mainly includes a push card. When a forward pulse voltage is applied to the coil of the relay, the magnetic circuit system operates, and the push card pushes the movable contact part, so that a movable contact of the movable contact part comes into contact with a static contact point of the static contact part, and hence the relay operates. When a reverse pulse voltage is applied to the coil, the magnetic circuit system operates, and the push card pushes the movable contact part, so that the movable contact of the movable contact part is disconnected from the static contact point of the static contact part, and hence the relay is reset.

Regarding a connecting structure between the movable contact part and the base of the magnetic latching relay in the related art, when the movable contact part matches with a slot of the base, a rib of the base serves as a positioning reference surface to abut against a first end of a movable contact lead-out piece; and the slot is provided with a boss on its side along a thickness of the movable contact lead-out piece, so that the movable contact lead-out piece is in interference fit with the slot of the base through the boss. With this structure, cumulative tolerances caused by a plurality of parts can be avoided, thereby improving the positioning accuracy of the movable contact lead-out piece. However, due to the thickness variation of the metal parts in this structure, the assembly may be too loose or too tight in practical use, and the positioning accuracy cannot be guaranteed.

### SUMMARY

The present disclosure aims to overcome the shortcomings in the related art and provide a connecting structure for a movable contact part and a base, as well as an electromagnetic relay. By providing a thinned structure at a position where the movable contact lead-out piece needs to be positioned, the material thickness variation of the movable contact lead-out piece may be reduced, the clamping reliability may be enhanced, and thus the positioning accuracy of the movable contact lead-out piece may be improved.

According to one aspect of the present disclosure, a connecting structure for a movable contact part and a base is provided. The movable contact part includes a movable contact piece and a movable contact lead-out piece. A first end of the movable contact piece is connected to a movable contact, a second end of the movable contact piece is fixedly connected to a first end of the movable contact lead-out piece, and the movable contact piece and the movable contact lead-out piece form a V shape. A second end of the movable contact lead-out piece is configured as a lead-out connecting part. The base is provided with a slot. A thinned structure extends outward from the first end of the movable contact lead-out piece, and is fitted in the slot of the base; the slot of the base is provided with a positioning rib, and the positioning rib abuts against a side surface of the thinned structure, the side surface of the thinned structure is a side surface of the movable contact lead-out piece facing the movable contact piece; the thinned structure is configured to reduce a material thickness variation of the movable contact lead-out piece and improve clamping reliability.

According to an embodiment of the present disclosure, the movable contact lead-out piece and the thinned structure each has an upper surface and a lower surface, the movable contact piece is connected to the lower surface of the movable contact lead-out piece, the upper surface of the thinned structure is flush with the upper surface of the movable contact lead-out piece, and the lower surface of the thinned structure is higher than the lower surface of the movable contact lead-out piece.

According to an embodiment of the present disclosure, the slot of the base is provided with a boss for interference fit, and the boss and the positioning rib are respectively located at two opposite sides of the slot.

According to an embodiment of the present disclosure, the first end of the movable contact lead-out piece is further provided with a step structure, the step structure and the thinned structure are respectively located at both sides of a connection position between the movable contact piece and the movable contact lead-out piece, and the second end of the movable contact piece abuts against the step structure.

According to an embodiment of the present disclosure, the step structure includes an upper step and a lower step, and the upper step and the lower step are of a same height.

According to an embodiment of the present disclosure, a socket portion of the slot of the base is further provided with inclined surfaces for guiding insertion of the movable contact lead-out piece.

According to an embodiment of the present disclosure, the movable contact lead-out piece is bent into a substantially L shape.

According to an embodiment of the present disclosure, the movable contact piece includes a U-shaped portion located between a connection position between the movable contact piece and the movable contact lead-out piece and a position where the movable contact of the movable contact piece is fixed, and an opening of the U-shaped portion faces the movable contact lead-out piece.

According to an embodiment of the present disclosure, the movable contact piece includes a plurality of contact pieces stacked together.

According to another aspect of the present disclosure, an electromagnetic relay is provided, including the connecting structure for a movable contact part and a base according to the present disclosure.

Compared with the related art, the present disclosure has the following beneficial effects.
1. In the present disclosure, the outer end of the first end of the movable contact lead-out piece at the connection position with the second end of the movable contact piece is fitted in the slot of the base. The slot of the base is provided with the positioning rib, and the positioning rib abuts against one side surface of the outer end of the first end of the movable contact lead-out piece, the side surface is the surface of the movable contact lead-out piece facing the movable contact piece. The thinned structure extends outward from the outer end of the first end of the movable contact lead-out piece, to reduce the material thickness variation of the movable contact lead-out piece and improve the clamping reliability. In the structure of the present disclosure, the movable contact lead-out piece is fitted with the base through the slot and the positioning rib provided on the slot, and the movable contact lead-out piece is thinned at the local position where it needs to be positioned, reducing the material thickness variation of the movable contact lead-out piece and improving the clamping reliability. Moreover, the movable contact piece is not disposed at the thinned structure, so that current does not flow through the thinned structure, but directly flows through the connection position between the movable contact piece and the movable contact lead-out piece, so that thinning is only performed at the local position, without need to thin the entire movable contact lead-out piece 12, thereby ensuring the material thickness of the body of the movable contact lead-out piece, which does not affect the current carrying and heat dissipation effects, but further reduces the variation, improving the accuracy of the fit between the base and the movable contact lead-out piece.

Further, in the present disclosure, the first end of the movable contact lead-out piece is further provided with the step structure, and the second end of the movable contact piece abuts against the step structure. Such a structure of the present disclosure allows the movable contact piece to perform a fan-shaped motion using the step structure as a fulcrum during up-down motion of the movable contact piece. In case of no step structure, the fulcrum may shift with the fan-shaped motion, causing a change in a reaction force of the movable contact piece. With the step structure, the fulcrum is fixed and unchanged. In case of the step structure, the motion fulcrum of the movable contact piece is fixed, and dispersion of the reaction force of the movable contact piece is small, so that the force transmitted from the reaction force of the movable contact part to the end of the movable contact lead-out piece is relatively uniform, further improving the fit and positioning accuracy of the base and the movable contact lead-out piece.

Further, in the present disclosure, the socket portion of the slot of the base is further provided with the inclined surfaces. Such a structure of the present disclosure allows the movable contact part to be automatically corrected during preassembly, making the assembly easy and effortless, and effectively preventing scraping.

### BRIEF DESCRIPTION OF THE DRAWINGS

The above and other features and advantages of the present disclosure will become more apparent by describing in detail its exemplary embodiments with reference to the accompanying drawings.
FIG. 1 is a front view of a contact leading-out piece in an embodiment of a connecting structure between a movable contact part and a base according to the present disclosure.
FIG. 2 is an enlarged view of part A in FIG. 1.
FIG. 3 is a front view showing connection position between a movable contact lead-out piece and a movable contact piece in an embodiment of a connecting structure between a movable contact part and a base according to the present disclosure.
FIG. 4 is an enlarged view of part B in FIG. 3.
FIG. 5 is a partial schematic view of an electromagnetic relay according to an embodiment of the present disclosure.
FIG. 6 is an enlarged view of part C in FIG. 5.

### DETAILED DESCRIPTION

Exemplary embodiments will be now described more fully with reference to the accompanying drawings. However, the exemplary embodiments may be embodied in a variety of forms and should not be construed as being limited to the embodiments set forth herein. Although relative terms such as "above" and "under" are used herein to describe the relationship of one component relative to another component, such terms are used herein only for the sake of convenience, for example, in the directions shown in the figures. It can be understood that if the referenced device is inversed upside down, a component described as "above" will become a component described as "under". Other relative terms such as "top" and "bottom" also have similar meanings. When a structure is described as "above" another structure, it probably means that the structure is integrally formed on another structure, or the structure is "directly" disposed on another structure, or the structure is "indirectly" disposed on another structure through an additional structure.

Words "one", "a/an", "the" and "said" are used herein to indicate the presence of one or more elements/component parts/and others. Terms "including" and "having" have an inclusive meaning which means that there may be additional elements/component parts/and others in addition to the listed elements/component parts/and others. Terms such as "first" and "second" are used herein only as markers and do not limit the number of objects modified after them.

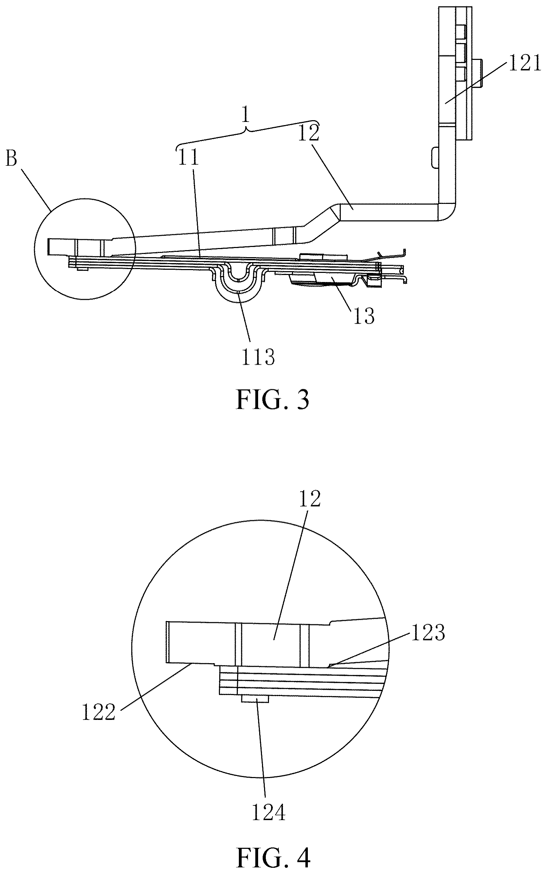

As shown in FIG. 3, a connecting structure for a movable contact part and a base according to the present disclosure includes a movable contact part 1 and a base 2. The movable contact part includes a movable contact piece 11 and a movable contact lead-out piece 12. A first end of the movable contact piece 11 (a right end of the movable contact piece 11 in FIG. 3) is connected to a movable contact 13, and a second end of the movable contact piece 11 (a left end of the movable contact piece 11 in FIG. 3) is fixedly connected to a first end of the movable contact lead-out piece 12 (a left end of the movable contact lead-out piece 12 in FIG. 3), so that the movable contact lead-out piece 12 and the movable contact piece 11 form a V shape after they are connected. A second end of the movable contact lead-out piece 12 is configured as a lead-out connecting part 121.

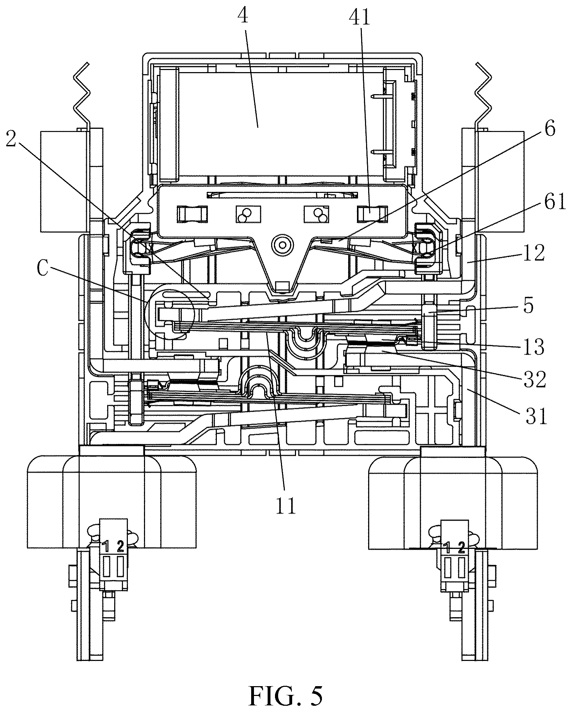

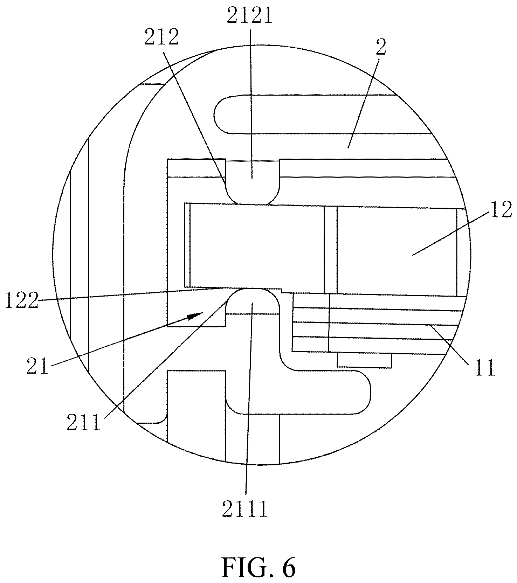

As shown in FIGS. 5 and 6, the base 2 is provided with a slot 21. The first end of the movable contact lead-out piece 12 is fitted in the slot 21 of the base 2. The slot 21 of the base 2 is provided with a positioning rib 211, and the positioning rib 211 abuts against an outer surface of the first end of the movable contact lead-out piece 12; the outer surface is a surface of the movable contact lead-out piece 12 facing the movable contact piece 11. A thinned structure 122 extends outward from the first end of the movable contact lead-out piece 12, to reduce a material thickness variation of the movable contact lead-out piece and improve clamping reliability.

The movable contact lead-out piece 12 and the thinned structure 122 each have an upper surface and a lower surface, and the movable contact piece 11 is connected to the lower surface of the movable contact lead-out piece 12. The upper surface of the thinned structure 122 is flush with the upper surface of the movable contact lead-out piece 12, and the lower surface of the thinned structure 122 is higher than the lower surface of the movable contact lead-out piece 12.

As shown in FIG. 6, in this embodiment, the slot 21 of the base 2 is provided with a boss 212 for interference fit. The boss 212 and the positioning rib 211 are respectively located at two opposite side surfaces of the slot 21, that is, at both sides of the thinned structure 122 of the movable contact lead-out piece 12. The thinned structure 122 is inserted into the slot 21 and is clamped and fixed by the boss 212 and the positioning rib 211.

As shown in FIG. 4, in this embodiment, the first end of the movable contact lead-out piece 12 is also provided with a step structure 123, and the step structure 123 and the thinned structure 122 are respectively located at both sides of the connection position between the movable contact lead-out piece 12 and the movable contact piece 11. The second end of the movable contact piece 11 abuts against the step structure 123.

In this embodiment, the step structure 123 includes an upper step and a lower step, and the upper and lower steps are of the same height.

As shown in FIG. 6, in this embodiment, a socket portion of the slot 21 of the base 2 is also provided with inclined surfaces, that is, inclined surfaces 2111 and 2121 are respectively provided on the positioning rib 211 and the boss 212, to facilitate guiding insertion of the movable contact lead-out piece.

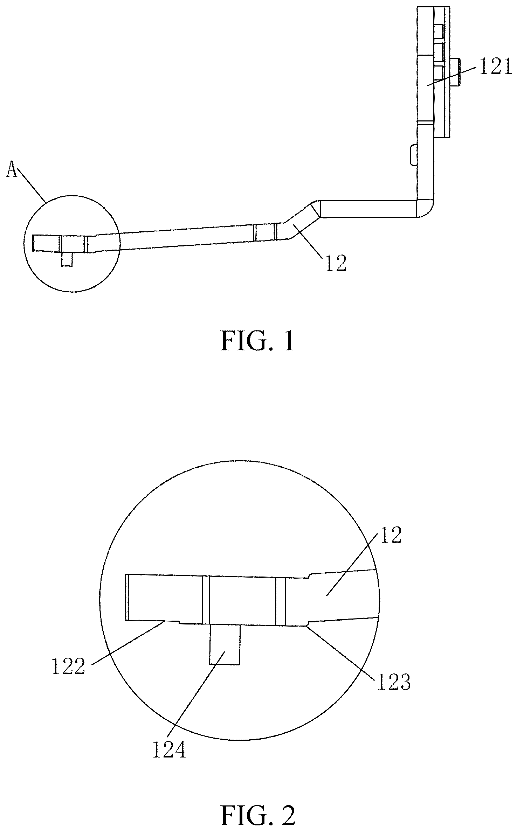

As shown in FIGS. 1 to 4, in this embodiment, the movable contact lead-out piece 12 is bent between the first end and the second end to substantially form an L shape. The first end of the movable contact lead-out piece 12 is also provided with a connecting protrusion 124, which is located between the step structure 123 and the thinned structure 122. The second end of the movable contact piece 11 is fixedly connected to the connecting protrusion 124 of the movable contact lead-out piece 12 by riveting.

As shown in FIG. 3, in this embodiment, the movable contact piece 11 has a U-shaped portion 113, which is located between a connection position between the movable contact piece 11 and the movable contact lead-out piece 12 and a position where the movable contact 13 is fixed. An opening of the U-shaped portion 113 faces the movable contact lead-out piece 12.

As shown in FIG. 4, in this embodiment, the movable contact piece 11 includes a plurality of contact pieces stacked together.

An electromagnetic relay according to the present disclosure includes the connecting structure for a movable contact part and a base as described in the above embodiments. The electromagnetic relay further includes a static contact 31, a static contact point 32, a magnetic circuit part 4, a push card 5, and an armature assembly 6. A first armature, a second armature, and a permanent magnet of the armature assembly 6 are combined into an integral I-shaped structure through a plastic member. A yoke 41 of the magnetic circuit part 4 is fitted at openings at both sides of the I-shaped structure of the armature assembly 6. The static contact point 32 is fixed at a first end of the static contact 31, and a second end of the static contact 31 is usually used as a lead-out part and extends out of a housing of the relay. The second end of the movable contact lead-out piece 12 also serves as a lead-out part and extends out of a housing of the relay. The movable contact 13 and the static contact point 32 are in a matching position. The armature assembly 6 matches with a first end of the push card 5 through a plastic push arm 61, and a second end of the push card 5 matches with the movable contact piece 11.

Regarding the connecting structure for the movable contact part and the base as well as the electromagnetic relay according to the present disclosure, the first end of the movable contact lead-out piece 12 is fitted in the slot 21 of the base 2 at the connection with the second end of the movable contact piece 11. The slot 21 of the base 2 is provided with the positioning rib 211, and the positioning rib 211 abuts against one side surface of the first end of the movable contact lead-out piece 12, the side surface is the surface of the movable contact lead-out piece 12 facing the movable contact piece 11. The thinned structure 122 extends outward from the first end of the movable contact lead-out piece 12, to reduce the material thickness variation of the movable contact lead-out piece and improve the clamping reliability. In the structure of the present disclosure, the movable contact lead-out piece is fitted with the base through the slot and the positioning rib, and the movable contact lead-out piece is thinned at a local position where it needs to be positioned, reducing the material thickness variation of the movable contact lead-out piece and improving the clamping reliability. Moreover, the thinned structure that extends is staggered with the movable contact piece, so that current does not flow through the thinned structure, but directly flows through the connection position between the movable contact piece and the movable contact lead-out piece, so that thinning is only performed at the local position, without need to thin the entire movable contact lead-out piece 12, thereby ensuring the material thickness of the body of the movable contact lead-out piece, which does not affect the current carrying and heat dissipation effects, but further reduces the variation, improving the accuracy of the fit between the base and the movable contact lead-out piece.

The present disclosure relates to the connecting structure between the movable contact part and the base, as well as the electromagnetic relay. The first end of the movable contact lead-out piece 12 is further provided with the step structure 123, the heights of the upper and lower steps of the step structure 123 are the same, and the second end of the movable contact piece 11 abuts against the step structure 123. Such a structure of the present disclosure allows the movable contact piece to perform a fan-shaped motion using the step structure as a fulcrum during up-down motion of the movable contact piece. In case of no step structure, the fulcrum may shift with the fan-shaped motion, causing a change in a reaction force of the movable contact piece. With the step structure, the fulcrum is fixed and unchanged. In case of the step structure, the motion fulcrum of the movable contact piece is fixed, and dispersion of the reaction force of the movable contact piece is small, so that the force transmitted from the reaction force of the movable contact part to the end of the movable contact lead-out piece is relatively uniform, further improving the fit and positioning accuracy of the base and the movable contact lead-out piece.

The connecting structure for the movable contact part and the base as well as the electromagnetic relay of the present disclosure adopt the socket portion of the slot 21 of the base 2, which is further provided with the inclined surfaces. Such a structure of the present disclosure allows the movable contact part to be automatically corrected during preassembly, making the assembly easy and effortless, and effectively preventing scraping.

It should be understood that the application of the present disclosure is not limited to the detailed structure and arrangement of components provided in this specification. The present disclosure may have other embodiments, and may be implemented and carried out in various ways. The aforementioned variations and modifications fall within the scope of the present disclosure. It should be understood that the present disclosure revealed and defined in this specification may extend to all alternative combinations of two or more individual features that are apparent or mentioned in the text and/or drawings. All of the different combinations form various alternative aspects of the present disclosure. Embodiments described in this specification illustrate the best modes known for carrying out the present disclosure, and will allow those skilled in the art to utilize the present disclosure.

## Claims

1. A connecting structure for a movable contact part and a base, wherein:
the movable contact part comprises a movable contact piece and a movable contact lead-out piece; a movable contact is connected to a first end of the movable contact piece, a second end of the movable contact piece is fixedly connected to a first end of the movable contact lead-out piece, and the movable contact piece and the movable contact lead-out piece form a V shape; a second end of the movable contact lead-out piece is configured as a lead-out connecting part;
the base is provided with a slot,
wherein a thinned structure extends outward from the first end of the movable contact lead-out piece, and is fitted in the slot of the base; the slot of the base is provided with a positioning rib, and the positioning rib abuts against a side surface of the thinned structure, the side surface of the thinned structure is a side surface of the movable contact lead-out piece facing the movable contact piece; the thinned structure is configured to reduce a material thickness variation of the movable contact lead-out piece and improve clamping reliability.

2. The connecting structure according to claim 1, wherein the movable contact lead-out piece and the thinned structure each has an upper surface and a lower surface, the movable contact piece is connected to the lower surface of the movable contact lead-out piece, the upper surface of the thinned structure is flush with the upper surface of the movable contact lead-out piece, and the lower surface of the thinned structure is higher than the lower surface of the movable contact lead-out piece.

3. The connecting structure according to claim 1, wherein the slot of the base is provided with a boss for interference fit, and the boss and the positioning rib are respectively located at two opposite sides of the slot.

4. The connecting structure according to claim 1, wherein the first end of the movable contact lead-out piece is further provided with a step structure, the step structure and the thinned structure are respectively located at both sides of a connection position between the movable contact piece and the movable contact lead-out piece, and the second end of the movable contact piece abuts against the step structure.

5. The connecting structure according to claim 4, wherein the step structure comprises an upper step and a lower step, and the upper step and the lower step are of a same height.

6. The connecting structure according to claim 1, 2 or 3, wherein a socket portion of the slot of the base is further provided with inclined surfaces for guiding an insertion of the movable contact lead-out piece.

7. The connecting structure according to claim 1, wherein the movable contact lead-out piece is bent into a substantially L shape.

8. The connecting structure according to claim 1, wherein the movable contact piece comprises a U-shaped portion located between a connection position between the movable contact piece and the movable contact lead-out piece and a position where the movable contact of the movable contact piece is fixed, and an opening of the U-shaped portion faces the movable contact lead-out piece.

9. The connecting structure according to claim 8, wherein the movable contact piece comprises a plurality of contact pieces stacked together.

10. An electromagnetic relay, comprising the connecting structure fora movable contact part and a base according to any one of claims 1 to 9.
